# EUROPÄISCHE PATENTSCHRIFT

(11) **EP 2 212 090 B1**
(45) Veröffentlichungstag und Bekanntmachung des Hinweises auf die Patenterteilung: **24.02.2016**
(21) Anmeldenummer: 08854255.0
(22) Anmeldetag: 03.11.2008
(51) Int. Cl.: B29C 47/60, B29C 47/62

(54) **EXTRUDERSCHNECKE FÜR EINEN SCHNECKENEXTRUDER**
SCREW FOR A SCREW EXTRUDER
VIS D'EXTRUSION POUR EXTRUDEUSE À VIS

(30) Priorität: 28.11.2007 DE 102007057613
(43) Veröffentlichungstag der Anmeldung: 04.08.2010
(73) Patentinhaber: Kautex Maschinenbau GmbH, 53229 Bonn (DE)
(72) Erfinder: KLEE, Christian, 53604 Bad Honnef (DE)
(74) Vertreter: Kierdorf Ritschel Richly
(86) Internationale Anmeldenummer: PCT/EP2008/009235
(87) Internationale Veröffentlichungsnummer: WO 2009/068151

(56) Entgegenhaltungen:
- JP-A- 2001 062 897
- US-A- 4 107 788
- US-A- 5 798 077
- US-A1- 2004 257 904
- DATABASE WPI Week 198228 Thomson Scientific, London, GB; AN 1982-58834E XP002525678 & SU 863 384 B (MUSTAKIMOV A A) 15. September 1981 (1981-09-15)

## Beschreibung

Die Erfindung betrifft eine Extruderschnecke für einen Schneckenextruder zur Plastifizierung und/oder zum Transport von thermoplastischen Kunststoffen mit wenigstens einem Extruderzylinder, mit einer Materialeinspeisung und mit wenigstens einem Extrudataustrag (10) an dem von der Materialeinspeisung abliegenden Ende des Extruderzylinders, wobei die Extruderschnecke wenigstens einen Schneckengang aufweist, einen Einzugsbereich und wenigstens einen Transport- und Mischbereich bildet und in dem Transport- und Mischbereich Mittel zur Scherung des Extrudats vorgesehen sind.

Die DE 31 32 429 C3 bezieht sich auf eine Extruderschnecke der eingangs genannten Art, wobei die Schnecke eine Einzugszone, eine Umwandlungszone und eine Ausstoßzone aufweist. Die Schnecke ist in der Einzugszone und im Anfangsbereich der Umwandlungszone zweigängig. Im ersten Drittel der Umwandlungszone befinden sich Einbauteile in Form von auf dem Umfang des Scheckenkerns befestigten Stiften in rechtwinklig zur Schneckenachse zwischen den Schneckenstegen angeordneter Reihe. Hierdurch wird der Mischungseffekt innerhalb der Kunststoffschmelze erhöht.

Ein Einschneckenextruder zur kontinuierlichen Verarbeitung von thermoplatischen Kunststoffen mit einer in einem Gehäuse drehbar angeordneten Schnecke, die einen Scher- und Mischabschnitt aufweist, ist beispielsweise aus der DE 42 27 018 C2 bekannt. Der Scher- und Mischabschnitt ist in einem schneckenstegfreien Schneckenabschnitt der Extruderschnecke vorgesehen.

Die bekannten Scher- und Mischteile sind in der Regel so ausgebildet, dass auf einem möglichst kurzen Abschnitt der Extruderschnecke eine möglichst intensive Durchmischung durch in den Schneckengang hereinragende Einbauteile erzielt wird.

Dies führt zu einem starken Druckanstieg in dem betreffenden Mischbereich der Extruderschnecke, wodurch ein überproportional hoher Anteil an Friktionswärme in einem verhältnismäßig kurzen Abschnitt der Extruderschnecke in das Extrudat eingebracht wird. Dies führt zu einer oftmals nicht wünschenswerten lokalen Erhöhung der Massentemperatur. Üblicherweise sind Schneckenextruder zur Plastifizierung und zum Transport von thermoplastischen Kunststoff über sogenannte Heizbänder beheizt, dennoch wird ein beachtlicher Teil der Plastifizierungsenergie über die Scherung des Materials in das Extrudat eingebracht. Es ist daher wünschenswert, den Eintrag von Friktionswärme in das Extrudat in vertretbaren Grenzen zu halten.

Darüber hinaus haben die Mischabschnitte oder Mischteile nach dem Stand der Technik den Nachteil, dass sie Durchsatzhindernisse darstellen, die die Durchsatzleistung des Extruders negativ beeinträchtigen.

Das Dokument US 2004/0257904 A1 offenbart gemäß dem Oberbegriff des Anspruch 1, eine verbesserte Mischvorrichtung für eine Plastifizierschnecke mit einer Materialeinspeisung, einem Kompressionsbereich, einem verbesserten Mischbereich und einem Mixerbereich. Der verbesserte Mischbereich umfasst dabei einen Schneckengang zum Transport des Materials und einen Schersteg zur Scherung des Extrudats. Die Höhe des Scherstegs ist im Bereich des verbesserten Mischbereichs konstant.

Das Dokument US 4,107,788 offenbart eine mehrgängige Extruderschnecke für die Verarbeitung von thermoplastischem und elastomeren Kunststoffen oder Kautschuk mit wendelförmig um den Schneckenkern herumgeführten Schneckenstegen, die in regelmäßigen Abständen und Längen abwechselnd niedriger gehalten sind.

Aus der SU 863384 A1 ist ein Schneckenmischer zur Verarbeitung von Polymerwerkstoffen der eingangs genannten Art bekannt. Die Extruderschnecke gemäß SU 863384 A1 umfasst drei Zonen, eine Einzugszone, eine Kompressionszone und eine sogenannte Meteringzone, wobei die Schnecke in der Kompressionszone mit einem zwei- bis sechsgängigen Zusatzgewinde versehen ist, das zur Intensivierung des Mischvorgangs vorgesehen ist. Die Höhe der Stege des Zusatzgewindes nehmen vom Beginn der Kompressionszone in Richtung auf den Extrudataustrag kontinuierlich ab, um einen Materialstau auszuschließen. Diese Ausbildung des Zusatzgewindes führt ebenfalls zu einem starken Druckanstieg in der Kompressionszone, wodurch ein verhältnismäßig hoher Anteil an Friktionswärme in einem verhältnismäßig kurzem Abschnitt der Extruderschnecke in das Extrudat eingebracht wird.

Der Erfindung liegt daher die Aufgabe zugrunde, eine Extruderschnecke der Eingangs genannten Art in Hinblick auf die zuvor geschilderten Nachteile zu verbessern.

Die Aufgabe wird gelöst durch eine Extruderschnecke gemäß Anspruch 1.

Die Extruderschnecke gemäß der Erfindung weist wenigstens einen Schneckengang auf und bildet einen Einzugsbereich sowie einen Transport- und Mischbereich, wobei sich in dem Schneckengang wenigstens ein fortlaufender Schersteg über den größten Teil der Länge der Extruderschnecke erstreckt.

Die Extruderschnecke gemäß der Erfindung kann sowohl ein- als auch mehrgängig ausgebildet sein.

Die zuvor beschriebene erfindungsgemäße Ausgestaltung hat den Vorzug, dass die Scherung des Extrudats über den größten Teil der Länge der Extruderschnecke erfolgt. Hierdurch wird weniger Friktionswärme in das Extrudat eingeleitet. Die Einleitung der Friktionswärme erfolgt verhältnismäßig gleichmäßig. Gleichzeitig ist eine leichtere Durchmischung des Extrudats bei einem höheren Durchsatz gewährleistet. Durch die gleichmäßige Einbringung der Reibungswärme in das Extrudat wird insbesondere auch gewährleistet, dass es nicht zu örtlich überhöhten Temperaturen des Massestroms kommt.

Bei einer vorteilhaften Variante der Extruderschnecke gemäß der Erfindung ist vorgesehen, dass der Schersteg nach Art eines Gewindesteges mit zu dem Schneckengang entgegengesetzt verlaufendem Steigungswinkel ausgebildet ist.

Der Schersteg erstreckt sich zweckmäßigerweise innerhalb des Schneckengangs der Extruderschnecke. Durch die Gestaltung des Scherstegs ist insbesondere gewährleistet, dass das Extrudat über einen großen Teil der Länge der Extruderschnecke über den Schersteg gehoben und vermischt wird. Die Scherenergie wird dabei gleichmäßig über einen großen Teil der Länge der Extruderschnecke in das Extrudat eingetragen.

Es ist zweckmäßig, wenn der Schersteg sich im wesentlichen ununterbrochen über den Umfang der Extruderschnecke erstreckt. Eine Unterbrechung des Schersteges ergibt sich nur an den Kreuzungspunkten mit dem Schneckensteg der Extruderschnecke.

Es können beispielsweise zwei oder mehr Scherstege auf dem Umfang der Extruderschnecke vorgesehen sein, so dass die Scherstege ein mehrgängiges und zu dem Scheckengewinde gegenläufiges Gewinde bilden. Eine Anordnung von vier Scherstegen zu einem viergängigen Schergewinde hat sich als besonders vorteilhaft erwiesen.

Bevorzugt sind die Scherstege symmetrisch auf den Umfang der Extruderschnecke angeordnet.

Bei einer Variante der Extruderschnecke gemäß der Erfindung ist vorgesehen, dass die Gangsteigung des oder der Scherstege größer als die Gangsteigung des Schneckensteges ist.

Die Gangsteigung des oder der Scherstege kann zwischen dem zweifachen und dem Quadrat der Gangsteigung des Schneckensteges betragen.

Die Scherstege können sich hinter dem Einzugsbereich über im wesentlichen die gesamte Länge der Extruderschnecke erstrecken.

Bei einer besonders günstigen Variante der erfindungsgemäßen Extruderschnecke ist vorgesehen, dass die Höhe des oder der Scherstege kleiner als die Gangtiefe des Schneckengangs ist. Die Höhe des oder der Scherstege kann beispielsweise von dem Einzugsbereich in Richtung auf den Extrudataustritt kontinuierlich zunehmen. Hierdurch ist gewährleistet, dass im Einzugsbereich der Extruderschnecke durch die Scherstege ein geringerer Gegendruck aufgebaut wird, der über die Länge der Extruderschnecke in Richtung Extrudataustrag kontinuierlich zunimmt.

Bei einer ebenfalls vorteilhaften Variante der Extruderschnecke gemäß der Erfindung ist vorgesehen, dass der oder die Scherstege ein asymmetrisches Querschnittsprofil aufweisen, das zweckmäßigerweise so gestaltet ist, dass ein Überströmen der Scherstege durch das Extrudat begünstigt wird. Hierzu kann vorgesehen sein, dass der oder die Scherstege eine bezogen auf die Förderrichtung des Extrudats führende und eine nacheilende Flanke aufweisen, dass die führende Flanke bezogen auf die Längsmittelachse der Extruderschnecke einen kleineren Neigungswinkel aufweist, als die bezogen auf die Förderrichtung nacheilende Flanke. Die in Bezug auf die Förderrichtung voreilende bzw. führende Flanke, d.h. die Flanke, auf die das Material aufläuft, kann flacher gestaltet sein als die Flanke, über welche das Material abläuft.

Die führende Flanke der Scherstege kann beispielsweise einen Neigungswinkel zwischen 15° und 60° aufweisen, wohingegen die nacheilende Flanke einen Neigungswinkel von zwischen 30° und 90° aufweisen kann. Vorzugsweise besitzt die führende Flanke einen Neigungswinkel von etwa 30° gegenüber der Horizontale bzw. gegenüber der Längsmittelachse der Extruderschnecke, wohingegen die nacheilende Flanke einen Neigungswinkel von etwa 60° aufweist.

Die Extruderschnecke gemäß der Erfindung kann ein zusätzliches Misch- und Scherteil aufweisen, das vorzugsweise eine Austragszone der Extruderschnecke bilden kann.

Zur Erzielung eines gewünschten Druckverlaufs besitzt die Extruderschnecke gemäß der Erfindung bevorzugt einen über ihre Länge nicht konstanten Kerndurchmesser. Beispielsweise kann der Kerndurchmesser der Extruderschnecke vor dem Einzugsbereich in Richtung des Förderstroms in Stufen oder kontinuierlich zunehmen. Die Erfindung ist allerdings so zu verstehen, dass der Kerndurchmesser der Extruderschnecke über deren Länge auch konstant sein kann.

Die Erfindung wird nachstehend anhand von in den Zeichnungen dargestellten Ausführungsbeispielen erläutert. Es zeigen:
- Figur 1: eine schematische Darstellung eines Schneckenextruders mit einer Extruderschnecke gemäß der Erfindung,
- Figur 2: eine Ansicht einer ersten Variante der Extruderschnecke gemäß der Erfindung,
- Figur 3: eine vergrößerte Schnittansicht durch die in Figur 2 dargestellte Extruderschnecke,
- Figur 4: eine Ansicht einer weiteren Variante einer Extruderschnecke gemäß der Erfindung mit einem zusätzlichen Scherteil,
- Figur 5: ein weiteres Ausführungsbeispiel einer Extruderschnecke gemäß der Erfindung mit vier Scherstegen,

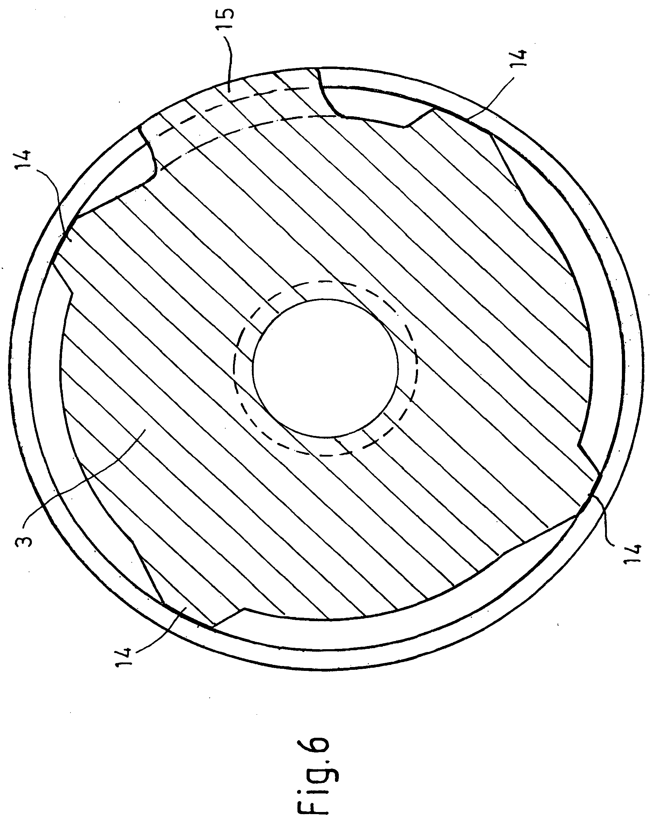

- Figur 6: einen Querschnitt durch die in Figur 5 dargestellte Extruderschnecke und,
- Figur 7: eine perspektivische Ansicht der in Figur 1 dargestellten Extruderschnecke.

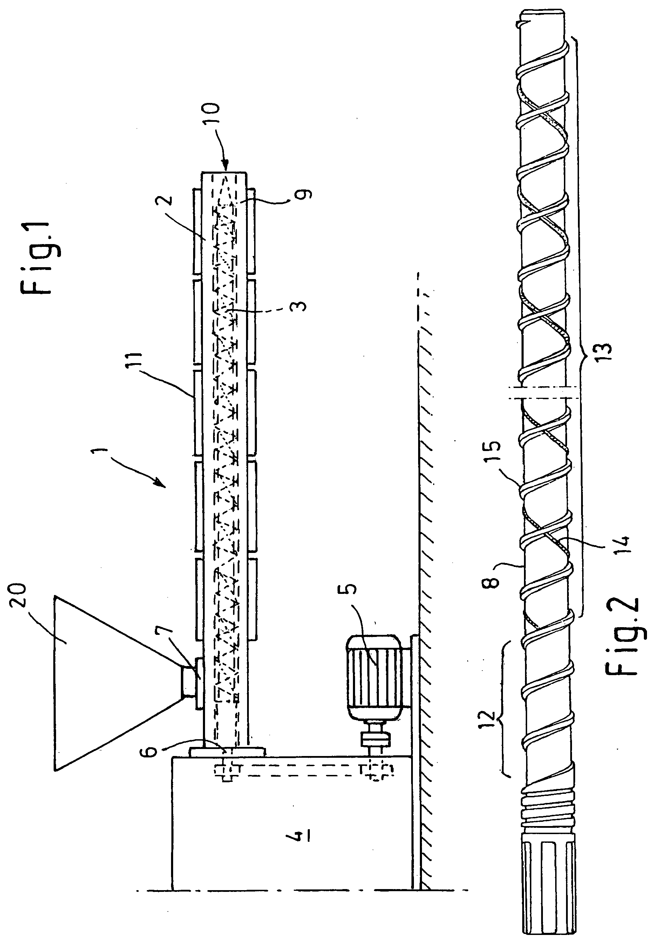

In Figur 1 ist ein Schneckenextruder 1 mit einer Extruderschnecke gemäß der Erfindung dargestellt, der als Einschneckenextruder ausgebildet ist. Dieser umfasst einen Extruderzylinder 2, eine innerhalb des Extruderzylinders 2 drehbewegliche Extruderschnecke 3, ein Getriebe 4 sowie einen Elektromotor 5. Die Extruderschnecke 3 ist an einer Abtriebswelle 6 des Getriebes 4 angeflanscht und wird mittels des Elektromotors 5 über das Getriebe 4 innerhalb des Extruderzylinders 2 in Drehung versetzt.

Als Materialeinspeisung ist an dem Extruderzylinder 2 eine Einfüllöffnung 7 mit einem dieser vorgeschalteten Einfülltrichter 20 vorgesehen. Über den Einfülltrichter 20 wird von der Extruderschnecke 3 ein thermoplastischer Kunststoff in Form eines Granulats in den Extruderzylinder 2 eingezogen. Die Extruderschnecke 3 ist in an und für sich bekannter Art und Weise mit einem Schneckengang 8 versehen, innerhalb dessen plastifiziertes Material bzw. das Extrudat in Richtung auf einem im Bereich der Schneckenspitze 9 befindlichen Extrudataustrag 10 transportiert wird. Als Schneckenspitze 9 wird im Folgenden das von dem Materialeinzug abliegende Ende der Extruderschnecke 3 bezeichnet. Die Schneckenspitze 9 ist in Figur 2 aus Vereinfachungsgründen nicht dargestellt.

Mit dem Bezugszeichen 11 sind sogenannte Heizbänder bezeichnet, die eine Aufheizung des Extruderzylinders 2 bewirken. Durch die Scherung des Granulats und die hieraus resultierende Friktionswärme und über die Heizbänder 11 wird die benötigte Plastifizierungsenergie in das Extrudat eingebracht, wobei gleichzeitig eine innige Vermischung der aufgeschmolzenen Partikel erzielt wird.

Der Bereich der Extruderschnecke 3 im Bereich der Materialeinspeisung bzw. im Bereich der Einfüllöffnung wird gemeinhin als Einzugsbereich 12 bezeichnet, wohingegen die verbleibende Länge der Extruderschnecke 3 den Transport- und Mischbereich 13 bildet.

Bei Extruderschnecken nach dem Stand der Technik wird üblicherweise zwischen einem Einzugsbereich, einem Scherbereich und einem Austragsbereich unterschieden.

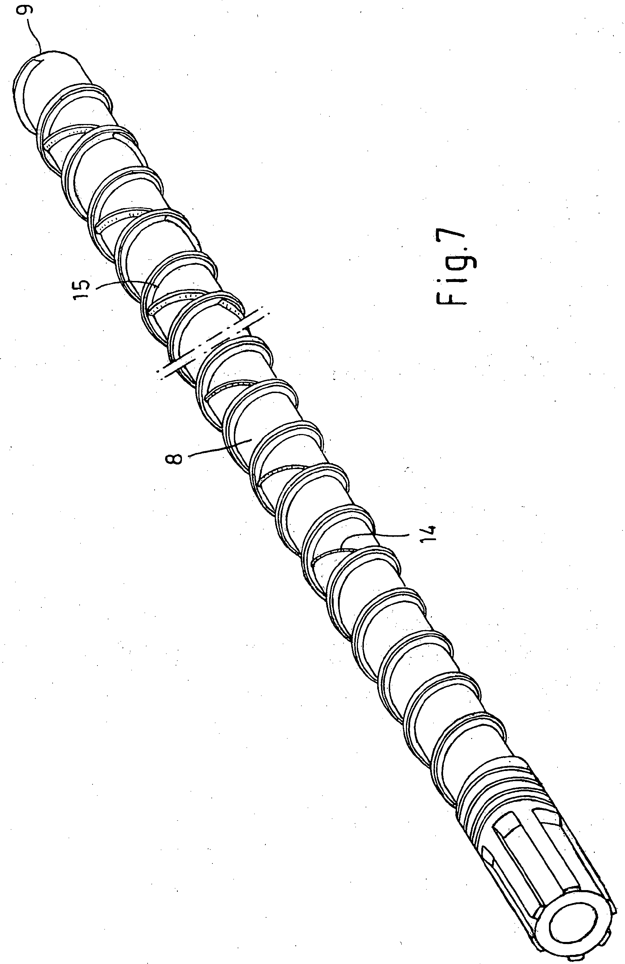

Eine erfindungsgemäß ausgebildete Extruderschnecke 3 ist beispielsweise in Figur 2 dargestellt. Diese Extruderschnecke 3 hat anders als im Stand der Technik keinen ausgezeichneten Scherbereich, vielmehr erfolgt die Scherung des Extrudats, wie nachstehend noch erläutert wird, über nahezu die vollständige Länge der Extruderschnecke 3. Zu diesem Zweck weist die Extruderschnecke 3 einen Schersteg 14 auf, der sich nach Art eines Gewindegangs über den größten Teil der Länge der Extruderschnecke 3 erstreckt. Der Schersteg 14 bildet bei dem in Figur 2 dargestellten Ausführungsbeispiel (siehe auch Figur 7) ein durchgehendes Schergewinde, wobei der Schersteg 14 die doppelte Gangsteigung des Schneckenstegs 15, jedoch den entgegengesetzten Neigungswinkel bzw. die entgegengesetzte Transportrichtung aufweist. Die Gangsteigung des Schersteges 14 kann zwischen dem zweifachen und dem Quadrat der Gangsteigung des Schneckensteges 15 betragen. Die Höhe des Scherstegs 14 ist allerdings kleiner als die Höhe des Schneckenstegs 15, und zwar derart, dass die Höhe des Schersteges 14 von Null beginnend hinter dem Einzugsbereich der Extruderschnecke 3 bis zu der Schneckenspitze kontinuierlich ansteigt auf einen Endbetrag, der kleiner ist als die Höhe des Schnecksteges 15.

Auf diese Art und Weise wird eine entgegen der Förderrichtung des Extrudats wirkende Scherung des Extrudats mit beginnend hinter dem Einzugsbereich 12 in Richtung auf die Schneckenspitze 9 zunehmender Scherwirkung erzeugt. Die Förderrichtung des Extrudats bezogen auf die Extruderschnecke 3 ist in Figur 2 von links nach rechts gerichtet. Gleiches gilt für die Darstellung in Figur 7, die in Perspektive die ansteigende Höhe des Scherstegs in Richtung auf die Schneckenspitze 9 veranschaulicht.

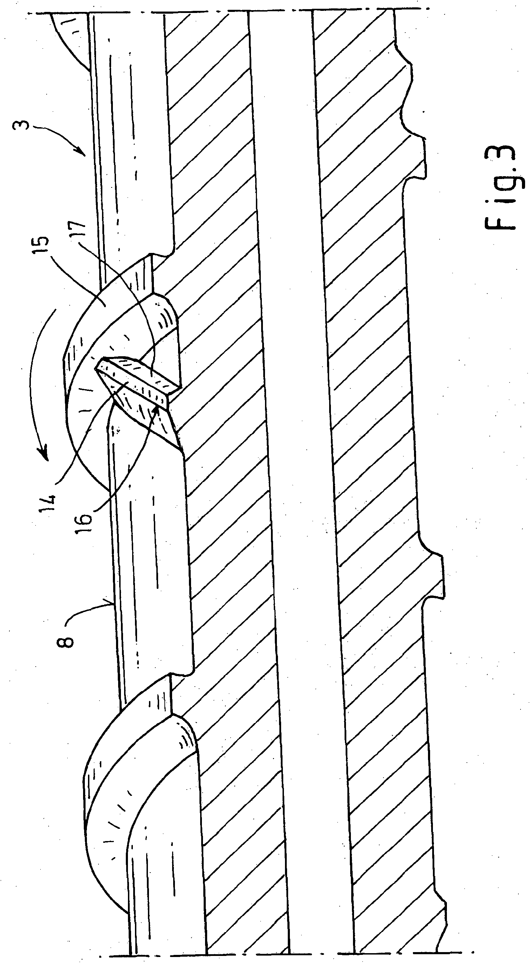

Die Geometrie des Schersteges ist aus der in Figur 3 dargestellten Schnittansicht zu entnehmen. Auch hier ist die Schleppströmung bzw. Förderrichtung des Extrudats in der Zeichnung von links nach rechts gerichtet, die Drehrichtung der Extruderschnecke 3 verläuft in der Ansicht in Richtung des eingezeichneten Pfeils.

Der mit 14 bezeichnete Schersteg besitzt ein asymmetrisches Querschnittsprofil, wie ohne weiteres aus der Darstellung in Figur 3 zu entnehmen ist, wobei dieser eine bezogen auf die Förderrichtung des Extrudats führende Flanke 16 und eine bezogen auf die Förderrichtung des Extrudats nacheilende Flanke 17 aufweist. Die führende Flanke 16 ist in Bezug auf die Längsmittelachse der Extruderschnecke 3 um einen Winkelbetrag von 30° abgeschrägt, wohingegen die nacheilende Flanke des Schersteges 14 in Bezug auf die Förderrichtung des Extrudats um einen Winkel von 60° abgeschrägt ist. Die nacheilende Flanke 17 kann sich genau so gut in einem Winkel von zwischen 30 und 90° bezogen auf die Längsmittelachse der Extruderschnecke 3 erstrecken. Auch kann die führende Flanke 16 einen beliebigen Winkelbetrag zwischen 15° und 60° bezogen auf die Längsmittelachse der Extruderschnecke 3 aufweisen. Die Übergänge zwischen den Scherstegen 14 und dem Kern der Extruderschnecke sowohl als auch die Übergange zwischen dem Schneckensteg 15 und dem Kern der Extruderschnecke sind als Radien ausgebildet, was in der Figur 3 aus Vereinfachungsgründen teilweise nicht dargestellt ist.

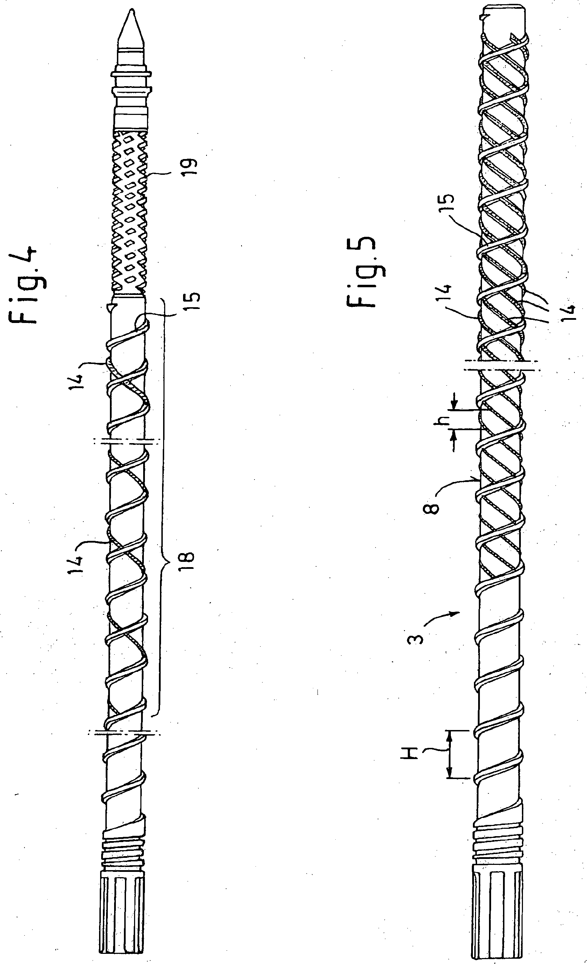

Bei der in Figur 4 dargestellten Variante der Extruderschnecke 3 besteht diese aus zwei Teilen, nämlich einer Grundschnecke 18 mit der zuvor beschriebenen Geometrie und einem zusätzlichen Scherteil 19, welches als separates Teil auf die Grundschnecke 18 aufgesetzt ist. Selbstverständlich kann das zusätzliche Scherteil 19 auch einstückig mit der Grundschnecke 18 ausgebildet sein. Das Scherteil 19 definiert bei dem beschriebenen Ausführungsbeispiel die Auslasszone des Schneckenextruders 1.

Der Schersteg 14 erstreckt sich über den Umfang der Extruderschnecke 3 innerhalb des Schneckengangs 8 der Extruderschnecke 3 und erzeugt eine der Schleppströmung bzw. Förderrichtung entgegengesetzte Triebkraft, die eine Scherung und Vergleichmäßigung sowie Vermischung des Extrudats erzeugt.

Nach einem weiteren in Figur 5 gezeigten Ausführungsbeispiel ist vorgesehen, dass die Extruderschnecke 3 vier entgegengesetzt dem Schneckengewinde wirkende Scherstege 14 aufweist, deren Ganghöhe h ein Viertel der Ganghöhe H des Schneckengangs 8 beträgt. Die Scherstege 14 bei dem in Figur 5 dargestellten Ausführungsbeispiel bilden sozusagen ein viergängiges Schergewinde. Der Begriff Schergewinde im Sinne der Erfindung ist etwas vereinfachend, denn, wie aus den Figuren zu ersehen ist, erstrecken sich die Scherstege 14 zwar bezogen auf den Kernumfang der Extruderschnecke 3 kontinuierlich bzw. fortlaufend über deren Umfang, unterbrochen sind diese jedoch zwangsläufig an den Kreuzungspunkten mit den Schneckenstegen 15.

### Bezugszeichenliste

1 Schneckenextruder
2 Extruderzylinder
3 Extruderschnecke
4 Getriebe
5 Elektromotor
6 Antriebswelle
7 Einfüllöffnung
8 Schneckengang
9 Schneckenspitze
10 Extrudataustrag
11 Heizbänder
12 Einzugsbereich
13 Transport- und Mischbereich
14 Schersteg
15 Schneckensteg
16 Führende Flanke des Schersteges
17 Nacheilende Flanke des Schersteges
18 Grundschnecke
19 Scherteil
20 Einfülltrichter

## Patentansprüche

1. Extruderschnecke für einen Schneckenextruder (1) zur Plastifizierung und/oder zum Transport von thermoplastischen Kunststoffen mit wenigstens einem Extruderzylinder (3), mit einer Materialeinspeisung und mit wenigstens einem Extrudataustrag (10) an dem von der Materialeinspeisung abliegenden Ende des Extruderzylinders (2), wobei die Extruderschnecke (3) wenigstens einen Schneckengang (8) aufweist, einen Einzugsbereich (12) und wenigstens einen Transport- und Mischbereich (13) bildet und in dem Transport- und Mischbereich (13) Mittel zu Scherung des Extrudats vorgesehen sind, wobei die Mittel zur Scherung des Extrudats wenigstens einen Schersteg (14) umfassen, der sich über wenigstens ein Drittel der Länge der Extruderschnecke (3), vorzugsweise über mehr als die Hälfte der Länge der Extruderschnecke (3) über deren Umfang erstreckt, **dadurch gekennzeichnet, dass** die Höhe des oder der Scherstege (14) von dem Einzugsbereich (12) in Richtung auf den Extrudataustrag (10) kontinuierlich zunimmt.

2. Extruderschnecke nach Anspruch 1, **dadurch gekennzeichnet, dass** der Schersteg (14) nach Art eines Gewindestegs mit zu dem Schneckengang (8) entgegengesetzt verlaufendem Steigungswinkel ausgebildet ist.

3. Extruderschnecke nach einem der Ansprüche 1 oder 2, **dadurch gekennzeichnet, dass** der Schersteg (14) sich innerhalb des Schneckengangs (8) der Extruderschnecke (3) erstreckt.

4. Extruderschnecke nach einem der Ansprüche 1 - 3, **dadurch gekennzeichnet, dass** wenigstens zwei Scherstege (14), vorzugsweise vier Scherstege (14) vorgesehen sind.

5. Extruderschnecke nach einem der Ansprüche 1-4, **dadurch gekennzeichnet, dass** die Scherstege (14) symmetrisch auf dem Umfang der Extruderschnecke angeordnet sind.

6. Extruderschnecke nach einem der Ansprüche 1 - 5, **dadurch gekennzeichnet, dass** die Gangsteigung des oder der Scherstege (14) größer als die Gangsteigung des Schneckensteges (15) ist.

7. Extruderschnecke nach einem der Ansprüche 1 - 6, **dadurch gekennzeichnet, dass** die Gangsteigung des oder der Scherstege (14) zwischen dem zweifachen und dem Quadrat der Gangsteigung des Schneckensteges (15) beträgt.

8. Extruderschnecke nach einem der Ansprüche 1 - 7, **dadurch gekennzeichnet, dass** sich der oder die Scherstege (14) hinter dem Einzugsbereich (12) beginnend über etwa die gesamte Länge der Extruderschnecke (3) erstrecken.

9. Extruderschnecke nach einem der Ansprüche 1 - 8, **dadurch gekennzeichnet, dass** die Höhe des oder der Scherstege (14) kleiner als die Höhe des Schneckenstegs (15) ist.

10. Extruderschnecke nach einem der Ansprüche 1-9, **dadurch gekennzeichnet, dass** der oder die Scherstege (14) ein asymmetrisches Querschnittsprofil aufweisen.

11. Extruderschnecke nach einem der Ansprüche 1-10, **dadurch gekennzeichnet, dass** der oder die Scherstege (14) eine bezogen auf die Förderrichtung des Extrudats führende (16) und eine nacheilende Flanke (17) aufweisen, dass die führende Flanke (16) bezogen auf die Längsmittelachse der Extruderschnecke (3) einen kleineren Neigungswinkel aufweist als die bezogen auf die Förderrichtung nacheilende Flanke (17).

12. Extruderschnecke nach Anspruch11, **dadurch gekennzeichnet, dass** die führende Flanke (16) des oder der Scherstege (14) einen Neigungswinkel zwischen 15° und 60°, vorzugsweise einen Neigungswinkel von etwa 30° aufweist und dass die nacheilende Flanke (17) einen Neigungswinkel zwischen 30° und 90°, vorzugsweise von etwa 60°, aufweist.

13. Extruderschnecke nach einem der Ansprüche 1-12, **dadurch gekennzeichnet, dass** ein zusätzliches Scherteil (19) vorgesehen ist.

## Claims

1. Extruder screw for a screw extruder (1) for plasticating and/or transporting thermoplastic materials with at least one extruder barrel (3), with a material feed and with at least one extrudate discharge (10) at the end of the extruder barrel (2) that is remote from the material feed, wherein the extruder screw (3) has at least one screw flight (8), forms an intake region (12) and at least one transporting and mixing region (13) and provided in the transporting and mixing region (13) are means for shearing the extrudate, wherein the means for shearing the extrudate comprise at least one shearing land (14), which extends over at least a third of the length of the extruder screw (3), preferably over more than half the length of the extruder screw (3), over the circumference thereof, **characterized in that** the height of the shearing land or lands (14) increases continuously from the intake region (12) in the direction of the extrudate discharge (10).

2. Extruder screw according to Claim 1, **characterized in that** the shearing land (14) is formed in the manner of a screwthread land with a helix angle progressing in opposite relationship to the screw flight (8).

3. Extruder screw according to either of Claims 1 and 2, **characterized in that** the shearing land (14) extends within the screw flight (8) of the extruder screw (3).

4. Extruder screw according to one of Claims 1-3, **characterized in that** there are provided at least two shearing lands (14), preferably four shearing lands (14).

5. Extruder screw according to one of Claims 1-4, **characterized in that** the shearing lands (14) are arranged symmetrically on the circumference of the extruder screw.

6. Extruder screw according to one of Claims 1-5, **characterized in that** the flight pitch of the shearing land or lands (14) is greater than the flight pitch of the screw land (15).

7. Extruder screw according to one of Claims 1-6, **characterized in that** the flight pitch of the shearing land or lands (14) is between twice and the square of the flight pitch of the screw land (15).

8. Extruder screw according to one of Claims 1-7, **characterized in that**, beginning behind the intake region (12), the shearing land or lands (14) extend(s) over approximately the entire length of the extruder screw (3).

9. Extruder screw according to one of Claims 1-8, **characterized in that** the height of the shearing land or lands (14) is less than the height of the screw land (15).

10. Extruder screw according to one of Claims 1-9, **characterized in that** the shearing land or lands (14) has/have an asymmetrical cross-sectional profile.

11. Extruder screw according to one of Claims 1-10, **characterized in that** the shearing land or lands (14) has/have a leading flank (16) and a trailing flank (17) in relation to the transporting direction of the extrudate, **in that** the leading flank (16) has a smaller angle of inclination with respect to the longitudinal centre axis of the extruder screw (3) than the trailing flank (17) in reflation to the transporting direction.

12. Extruder screw according to Claim 11, **characterized in that** the leading flank (16) of the shearing land or lands (14) has an angle of inclination of between 15° and 60°, preferably an angle of inclination of approximately 30°, and **in that** the trailing flank (17) has an angle of inclination of between 30° and 90°, preferably of approximately 60°.

13. Extruder screw according to one of Claims 1-12, **characterized in that** there is provided an additional shearing portion (19).

## Revendications

1. Vis d'extrusion pour extrudeuse à vis (1) pour la plastification et/ou pour le transport de matières plastiques thermoplastiques comprenant au moins un cylindre d'extrudeuse (3), avec une injection de matériau et avec au moins une décharge d'extrudat (10) au niveau de l'extrémité du cylindre d'extrudeuse (2) adjacente à l'injection de matériau, la vis d'extrusion (3) présentant au moins un pas de vis (8), formant une zone d'entrée (12) et au moins une zone de transport et de mélange (3), et des moyens pour le cisaillement de l'extrudat étant prévus dans la zone de transport et de mélange (13), les moyens pour le cisaillement de l'extrudat comprenant au moins une nervure de cisaillement (14) qui s'étend sur au moins un tiers de la longueur de la vis d'extrusion (3), de préférence sur plus de la moitié de la longueur de la vis d'extrusion (3) sur sa périphérie, **caractérisée en ce que** la hauteur de la ou des nervures de cisaillement (14) augmente en continu depuis la zone d'entrée (12) dans la direction de la décharge d'extrudat (10).

2. Vis d'extrusion selon la revendication 1, **caractérisée en ce que** la nervure de cisaillement (14) est réalisée à la manière d'une nervure de filetage avec un angle de pas s'étendant dans le sens opposé au filetage du pas de vis (8).

3. Vis d'extrusion selon l'une quelconque des revendications 1 ou 2, **caractérisée en ce que** la nervure de cisaillement (14) s'étend à l'intérieur du filetage du pas de vis (8) de la vis d'extrusion (3).

4. Vis d'extrusion selon l'une quelconque des revendications 1 à 3, **caractérisée en ce qu'**au moins deux nervures de cisaillement (14), de préférence quatre nervures de cisaillement (14), sont prévues.

5. Vis d'extrusion selon l'une quelconque des revendications 1 à 4, **caractérisée en ce que** les nervures de cisaillement (14) sont disposées de manière symétrique sur la périphérie de la vis d'extrusion.

6. Vis d'extrusion selon l'une quelconque des revendications 1 à 5, **caractérisée en ce que** le pas de filet de la ou des nervures de cisaillement (14) est plus important que le pas de filet de la nervure de la vis sans fin (15).

7. Vis d'extrusion selon l'une quelconque des revendications 1 à 6, **caractérisée en ce que** le pas de filet de la ou des nervures de cisaillement (14) est compris entre le double et le quadruple du pas de filet de la nervure de la vis sans fin (15) .

8. Vis d'extrusion selon l'une quelconque des revendications 1 à 7, **caractérisée en ce que** la ou les nervures de cisaillement (14) s'étendent, en commençant derrière la zone d'entrée (12), sur approximativement toute la longueur de la vis d'extrusion (3).

9. Vis d'extrusion selon l'une quelconque des revendications 1 à 8, **caractérisée en ce que** la hauteur de la ou des nervures de cisaillement (14) est intérieure à la hauteur de la nervure de la vis sans fin (15).

10. Vis d'extrusion selon l'une quelconque des revendications 1 à 9, **caractérisée en ce que** la ou les nervures de cisaillement (14) présentent un profil asymétrique en section transversale.

11. Vis d'extrusion selon l'une quelconque des revendications 1 à 10, **caractérisée en ce que** la ou les nervures de cisaillement (14) présentent un flanc d'attaque (16) par rapport à la direction de transport de l'extrudat et un flan de fuite (17), **en ce que** le flan d'attaque (16), par rapport à l'axe médian longitudinal de la vis d'extrusion (3), présente un angle d'inclinaison inférieur au flanc de fuite (17) par rapport à la direction de transport.

12. Vis d'extrusion selon la revendication 11, **caractérisée en ce que** le flanc d'attaque (16) de la ou des nervures de cisaillement (14) présente un angle d'inclinaison compris entre 15° et 60°, de préférence un angle d'inclinaison d'environ 30° et **en ce que** le flanc de fuite (17) présente un angle d'inclinaison compris entre 30° et 90°, de préférence d'environ 60°.

13. Vis d'extrusion selon l'une quelconque des revendications 1 à 12, **caractérisée en ce qu'**une partie de cisaillement supplémentaire (19) est prévue.
